# EUROPÄISCHE PATENTANMELDUNG

(11) **EP 4 342 807 A1**
(43) Veröffentlichungstag der Anmeldung: **27.03.2024**
(21) Anmeldenummer: 23192110.7
(22) Anmeldetag: 18.08.2023
(51) Int. Cl.: B65C 9/06, B41J 3/407

(54) **VERFAHREN UND VORRICHTUNG ZUM INSPIZIEREN VON AN BEHÄLTNISSEN ANGEORDNETEN BEHÄLTNISVERSCHLÜSSEN**

(30) Priorität: 01.09.2022 DE 102022122219
(71) Anmelder: Krones AG, 93073 Neutraubling (DE)
(72) Erfinder: Jogsch, Michael, 93073 Neutraubling (DE)
(74) Vertreter: Bittner, Bernhard

(57) **Zusammenfassung**

Verfahren zum Herstellen von mit Getränken befüllten und mit Behältnisverschlüssen (12) versehenen oder zu versehenden Behältnissen (10), wobei der Behältnisverschluss (12) eine auf einer Mündung des Behältnisses (10) aufgeschraubte Verschlusskappe (12a), ein in einer Längsrichtung (L) des Behältnisses unterhalb der Mündung (10a) an dem Behältnis (10) angeordnetes Sicherungsmittel (12b), einen Verbindungsstrang (12c), der das Sicherungsmittel mit der Verschlusskappe (12a) verbindet, einen ersten Befestigungsabschnitt (12d) an dem der Verbindungsstrang an der Verschlusskappe (12a) befestigt ist und einen zweiten Befestigungsabschnitt (12e) mit dem der Verbindungsstrang an dem Sicherungsmittel angeordnet ist, aufweist, wobei die Behältnisse mittels einer Transporteinrichtung transportiert werden und mittels einer Inspektionseinrichtung (2) inspiziert werden, wobei eine Drehstellung des Behältnisverschlusses (12) gegenüber dem Behältnis (10) und/oder eine Drehstellung des Behältnisverschlusses (12) und/oder eine Drehstellung des Behältnisses (10) ermittelt wird, dadurch gekennzeichnet, dass nach der Inspektion der Behältnisse die Behältnisse mit einem Etikett (14) und/oder einem Aufdruck (14) ausgestattet werden, wobei bei dieser Ausstattung die ermittelte Drehstellung des Behältnisverschlusses berücksichtigt wird.

## Beschreibung

Die vorliegende Erfindung bezieht sich auf ein Verfahren und eine Vorrichtung Herstellen von mit Flüssigkeiten und insbesondere mit Getränken befüllten Behältnissen und insbesondere Kunststoffbehältnissen.

Im Bereich der getränkeherstellenden Industrie ist es bekannt, dass Maschinen zunächst Behältnisse befüllen und anschließend mit Verschlüssen verschließen. Dabei ist ein wesentliches Kriterium die Frage, ob die Behältnisverschlüsse ordnungsgemäß bzw. abdichtend auf den Mündungen bzw. an den Gewinden der Behältnisse aufgeschraubt sind. Weiterhin ist es auch bekannt, dass diese Behältnisse nach ihrer Befüllung mit einem Aufdruck oder einem Etikett versehen werden.

Aus der DE 10 2008 044 926 A1 sind eine Vorrichtung und ein Verfahren zum Ausrichten eines Behälters bekannt. Die EP 1 427 639 B1 beschreibt eine Etikettiervorrichtung. Aus der bisher noch unveröffentlichten DE 10 2021 121 489 sind ein Verfahren und eine Vorrichtung zum Inspizieren von mit Verschlüssen versehenen Behältnissen bekannt.

Weiterhin ist aus dem Stand der Technik eine Reihe von Inspektionsanlagen bekannt. So ist es bekannt, dass sowohl an den Behältnissen selbst als auch an den Verschlüssen Markierungen angebracht sind, die von einer Inspektionseinrichtung erfasst werden können und so Informationen über eine Drehstellung des Behältnisses und des Verschlusses gewonnen werden.

Durch einen Abgleich dieser Markierungen bzw. deren Drehpositionen kann auf den Zustand des Verschlusses geschlossen werden. So besitzen beispielsweise Einweg PET Behältnisse und deren Schraubverschlüsse eindeutige Markierungen. Die Markierung(en) ist(sind) in einem festen Bezug zu einer Gewindeorientierung angeordnet. Ist der Behältnisverschluss korrekt appliziert, müssen die beiden Markierungen in einem bestimmten Winkelzueinander (insbesondere einem Winkel gegenüber der Behältnisachse bzw. der Längsrichtung des Behältnisses) oder in einer andersgearteten Beziehung stehen. Fertigungs- und Applizierungstoleranzen werden über den zulässigen tolerierten Abstand der beiden Markierungen festgelegt. Solange Schluss und Behältermarken innerhalb dieser Toleranzen liegen, ist gewährleistet, dass das Dichtungskonzept (Verschluss und Mündungsstück) korrekt arbeitet.

Üblich sind am Verschluss Markierungen, die eine feste Beziehung zur Phasenlage des Gewindeganges im Verschlussstück besitzen und visuell möglichst unauffällig angebracht sind. So ist es beispielsweise bekannt, dass ein Stück eines Rändelbereichs etwas gekürzt ist.

Üblich sind an den Behältnissen Tragringmarkierungen oder Markierungen im Halsbereich unterhalb eines Supportrings bzw. Tragrings, die eine feste Beziehung zur Phasenlage des Gewindegangs am Mundstück aufweisen. Bevorzugt weisen die Behältnisse einen Tragring auf. Bevorzugt sind die Behältnisse aus einem transparenten Material, beispielsweise PET hergestellt.

Die bis dato üblichen Verschlüsse waren in der Regel ohne Logo oder Prägung auf dem Deckel. Falls derartige Merkmale vorhanden waren, war nicht gesichert, dass diese in einer Phasenbeziehung zu dem Gewindegang im Mundstück standen.

Mittlerweile ist eine neue Gattung an Verschlüssen bekannt, sogenannte tethered caps. Diese haben gemeinsam, dass sie in irgendeiner Form eine Art Lasso-Funktion aufweisen. Diese Funktion bewirkt, dass der Verschluss über das Lasso mit dem auf dem Behältnis angeordneten Sicherungsring, auch nach dessen öffnen, verbunden bleibt.

Im Stand der Technik ist dieser Verschluss mit seinem "Lasso" zufällig zu einem Aufdruck oder einem Etikett des Behältnisses angeordnet. Somit sind alle möglichen Winkelversätze zwischen dem Etikett bzw. Aufdruck und dem Verschluss möglich.

Daher steht das "Lasso" in alle möglichen Richtungen ab und bei der Betrachtung des Behältnisses entsteht ein unordentlicher Eindruck.

Der vorliegenden Erfindung liegt daher die Aufgabe zugrunde, ein Verfahren und eine Vorrichtung zur Verfügung zu stellen, welche die Herstellung von Behältnissen mit solchen Verschlüssen ermöglichen, welche einen einheitlichen Gesamteindruck, insbesondere hinsichtlich der Anordnung eines Etiketts und/oder der Anordnung des Verschlusses.

Dies wird erfindungsgemäß durch die Gegenstände der unabhängigen Patentansprüche erreicht. Vorteilhafte Ausführungsformen und Weiterbildungen sind Gegenstand der Unteransprüche.

Damit der Verschluss nach wie vor kompakt bleiben kann, sollte das Lasso bzw. der unten als Verbindungsstrang bezeichnete Abschnitt nicht länger als notwendig sein. Hieraus ergibt sich, dass das Lasso bzw. der Verbindungssteg bzw. Verbindungsstrang eine gewisse Mindestlänge haben soll, aber auch nicht länger als notwendig sein soll. Mit anderen Worten wird der Steg bzw. Strang bzw. das Lasso genau so lange sein, dass beim Aufschrauben, beim Erreichen des Gewindeendes der Steg bzw. Strang wirken kann. Technisch betrachtet weist diese Lasso-Funktion bevorzugt eine feste Beziehung zu den Verschlussgewindegang auf.

Bei einem erfindungsgemäßen Verfahren zum Herstellen von mit Getränken befüllten und mit Behältnisverschlüssen versehenen oder (mit Behältnisverschlüssen) zu versehenden Behältnissen, wobei der Behältnisverschluss eine auf eine Mündung des Behältnisses aufgeschraubte (oder aufzuschraubende) Verschlusskappe, ein in einer Längsrichtung des Behältnisses unterhalb der Mündung an dem Behältnis angeordnetes Sicherungsmittel, wenigstens einen Verbindungsstrang bzw. Verbindungssteg, der das Sicherungsmittel mit der Verschlusskappe verbindet, einen ersten Befestigungsabschnitt, an und/oder mit dem der Verbindungsstrang an der Verschlusskappe befestigt ist und einen zweiten Befestigungsabschnitt, an und/oder mit dem der Verbindungsstrang an dem Sicherungsmittel angeordnet ist, aufweist, wobei die Behältnisse mittels einer Transporteinrichtung transportiert werden und mittels einer Inspektionseinrichtung inspiziert (und/oder mit einer Beobachtungseinrichtung beobachtet) werden, wobei eine Drehstellung des Behältnisverschlusses gegenüber dem Behältnis und/oder eine Drehstellung des Behältnisverschlusses und/oder eine Drehstellung des Behältnisses ermittelt wird

Vorteilhaft wird eine Drehstellung des Behältnisverschlusses gegenüber über dem Behältnis und/oder bezüglich einer Längsrichtung des Behältnisses, insbesondere aus einer Position des Verbindungsstrangs und/oder einer Position wenigstens eines Befestigungsabschnitts ermittelt.

Die Erfindung ist anwendbar bei Behältnissen, die bereits mit Behältnisverschlüssen versehen sind und in diesem Zustand ausgestattet, beispielsweise etikettiert oder bedruckt werden. In diesem Fall wird bevorzugt eine Drehstellung des Behältnisverschlusses oder des Behältnisses erfasst.

Daneben ist die Erfindung aber auch bei noch nicht verschlossenen und/oder noch nicht befüllten Behältnissen möglich. Hier kann eine Drehstellung des Behältnisses erfasst werden. Da die Behältnisse immer definiert auf den Behältnissen aufgeschraubt sind, folgt nach dem (ordnungsgemäßen) Verschliessen des Behältnisses auch eine definierte Drehstellung des Behältnisverschlusses

Bei einem vorteilhaften Verfahren wird einerseits eine Drehstellung des Behältnisses und/oder des Behältnisverschlusses andererseits jedoch auch eine Drehstellung des Behältnisverschlusses gegenüber dem Behältnis ermittelt. Dabei ist es möglich, dass eine Drehung und/oder Drehstellung der Behältnisverschlusses gegenüber dem Behältnis ermittelt wird und bevorzugt zur Ermittlung der Drehstellung eine erste an dem Behältnis befindliche Markierung (bzw. ein Merkmal) erfasst und oder aufgenommen wird.

Auf diese Weise ist es möglich, dass mit der gleichen Inspektions- bzw. Beobachtungseinrichtung sowohl auf eine (insbesondere absolute) Drehstellung des Verschlusses geschlossen werden kann als auch darauf, ob der Verschluss ordnungsgemäß an dem Behältnis angeordnet ist.

Erfindungsgemäß werden nach der Inspektion der Behältnisse die Behältnisse mit einem Etikett, einem farbigen Behälterdirektdruck mittels Inkjet und/oder einem Aufdruck (Kennzeichnung) ausgestattet, wobei bei dieser Ausstattung die ermittelte Drehstellung des Behältnisverschlusses und/oder des Behältnisses berücksichtigt wird.

Es wird daher eine Möglichkeit vorgeschlagen, um die Ausstattung, etwa ein Etikett oder einen Aufdruck nicht an einer beliebigen Position an dem Behältnis aufzubringen, sondern an einer Position, welche sich an einer vorgegebenen Position zu dem Behältnisverschluss orientiert.

Um diese Drehstellung zu erfassen bestehen mehrere Möglichkeiten. Zunächst ist es möglich, die Drehstellung des Verschlusses (bzgl. einer Längsrichtung des Behältnisses) selbst zu erfassen. Es wäre jedoch auch möglich, die Drehstellung des Behältnisses (bezüglich seiner Längsrichtung) zu erfassen. Bei einem ordnungsgemäß verschlossenen Behältnis ist der Verschluss in einer definierten Drehstellung an dem Behältnis angeordnet. Aus diesem Grund kann aus der Drehstellung des Behältnisses auch auf die Drehstellung des Behältnisverschlusses geschlossen werden.

Bevorzugt handelt es sich bei dem Sicherungsmittel um einen Sicherungsring, der bevorzugt unabhängig von einem Öffnungszustand des Behältnisses stets an dem Behältnis verbleibt. Dabei ist es möglich, dass dieser Sicherungsring in einem noch ungeöffneten Zustand des Behältnisses in Verbindung mit der Verschlusskappe steht und durch den ersten Öffnungsvorgang von der Verschlusskappe getrennt wird und dann bevorzugt in der Längsrichtung des Behältnisses von der Verschlusskappe beabstandet ist. Bevorzugt ist dieser Sicherungsring gegenüber dem Behältnis (insbesondere im Wesentlichen frei) drehbar.

Bevorzugt handelt es sich bei dem Befestigungsabschnitt um einen Gelenkabschnitt, an dem der Verbindungsstrang an der Verschlusskappe oder dem Sicherungsmittel angeordnet ist.

Bei einem bevorzugten Verfahren wird die Drehstellung des Behältnisverschlusses aus einer Position des Verbindungsstrangs und/oder einer Position wenigstens eines Befestigungsabschnitts ermittelt.

Bei einem bevorzugten Verfahren werden die Informationen, aus welchen die Drehstellung des Behältnisverschlusses gegenüber dem Behältnis abgeleitet werden, nicht durch an dem Behältnisverschluss zu diesem Zweck angebrachte Markierungen ermittelt, sondern der Verbindungsstrang bzw. die Befestigung des Sicherungsmittels wird zu diesem Zweck verwendet.

Damit wird vorteilhaft vorgeschlagen, dass bei der beschriebenen neuen Gattung der tethered caps deren Lasso-Funktion bzw. der Verbindungsstrang als Merkmal an dem Verschluss verwendet wird und/oder die Drehstellung durch eine Erfassung dieser Lasso Funktion erfasst wird.

Diese Lasso-Funktion kann von Verschlusshersteller zu Verschlusshersteller unterschiedlich realisiert werden. Gleichwohl bleibt jedoch das Grundprinzip der festen Phasenbeziehung des Lassos bzw. Verbindungstrangs zu dem Gewindegang in dem Verschluss erhalten. Je nach Gattung des Behältnisverschlusses kann diese Phasenbeziehung jedoch variieren.

Bei einem bevorzugten Verfahren wird eine 360° Erkennung des Behältnisverschlusses verwendet. Diese Erkennung kann bevorzugt sowohl den Verschluss als auch den Verbindungsstrang als auch Teile davon erkennen. Diese Erkennung erkennt gegebenenfalls auch, um welche Art von Verschluss bzw. Verbindungsstrang (technische Umsetzung, die Hersteller, Verschlussorte) es sich handelt.

Bei einem bevorzugten Verfahren wird auf Basis dieser Informationen ein Offset zwischen dem Behältnisverschluss (bzw. dessen Drehposition) und dem Behältnis (bzw. dessen Drehposition) ermittelt bzw. allgemein ein Korrekturwert.

Bei einem weiteren bevorzugten Verfahren wird auf Basis dieser Informationen eine Drehstellung des Behältnisverschlusses ermittelt und/oder ein Korrekturwert.

Bei einem bevorzugten Verfahren wird ein optisches Merkmal verwendet, um die Verbindung zwischen den Behältnisverschluss und dem Behältnis zu inspizieren und/oder um eine Drehstellung des Behältnisverschlusses zu erfassen.

Bei einem weiteren bevorzugten Verfahren wird (insbesondere nach der Inspektion) das mit dem Verschluss versehene Behältnis hinsichtlich seiner Drehstellung bezüglich seiner Längsrichtung ausgerichtet wird und insbesondere um einen vorgegebenen Winkel bezüglich der Längsrichtung gedreht.

Bei diesem Verfahren wird also die Drehstellung des Verschlusses und/oder der Behältnisses erfasst und anhand dieser erfassten Drehstellung wird das Behältnis ausgerichtet und insbesondere um einen vorgegebenen Winkel bezüglich seiner Längsrichtung gedreht.

Bei einem vorteilhaften Verfahren wird der vorgegebene Winkel unter Berücksichtigung der ermittelten Drehstellung des Behältnisverschlusses ermittelt. So ist es möglich, dass die Inspektionseinrichtung eine bestimmte Drehstellung des Verschlusses oder des Behältnisses erfasst. Diese Drehstellung kann dann verglichen werden mit einer Solldrehstellung und das Behältnis kann so ausgerichtet bzw. gedreht werden, dass der Verschluss in die Solldrehstellung gelangt.

Bevorzugt werden die Behältnisse jeweils in einer (im Wesentlichen) gleichen Drehstellung des Verschlusses ausgestattet d.h. insbesondere bedruckt oder etikettiert.

Bevorzugt erfolgt eine Etikettierung während sich das Behältnis mit dem daran angeordneten Verschluss in einer Solldrehstellung befindet, welche insbesondere durch eine Ausrichtung erreicht wurde.

Bei einem weiteren bevorzugten Verfahren wird eine Drehstellung des Behältnisverschlusses erfasst und mit einer Solldrehstellung verglichen.

Bevorzugt wird anschließend das Behältnis gedreht, bis die Solldrehstellung erreicht ist. Dabei ist es möglich dass das Behältnis zur Ausrichtung immer nur in eine Drehrichtung gedreht wird. Auf diese Weise könnte eine Drehung um Drehwinkel von 0 - 360° erfolgen.

Es wäre aber auch möglich, dass ein Drehwinkel ermittelt wird, um den das Behältnis gedreht werden muss und dann entschieden wird, in welche Richtung das Behältnis gedreht wird. Auf diese Weise wird das Behältnis jeweils nur um maximal 180° gedreht.

Bei einem weiteren bevorzugten Verfahren erfolgt die Ausrichtung derart, dass die Ausstattung an dem Behältnis dem Verbindungsstrang gegenüber liegt. Wenn also die Vorderseite des Behältnisses, d.h. derjenige Abschnitt, an dem sich das Zentrum eines Aufdrucks oder eines Etiketts befindet, in eine Richtung X weist, so erstreckt sich bevorzugt der Verbindungsstrang an der Rückseite des Behältnisses und bevorzugt in die Richtung -X.

Es wird also im Rahmen der Erfindung vorgeschlagen, dass das oben erwähnte Lasso und/oder dessen Position detektiert wird und danach das Behältnis mit dem Verschluss (beispielsweise in einer Etikettiermaschine so gedreht bzw. ausgerichtet wird, dass das Lasso immer winkeltreu zu der noch zu applizierenden Ausstattung beispielsweise dem Etikett steht. Vorzugsweise weist das Lasso genau in die entgegengesetzte Richtung verglichen mit einem Vorderetikett.

Bei einem bevorzugten Verfahren wird zunächst das Behältnis verschlossen und anschliessend etikettiert.

Es ist jedoch, wie oben erwähnt auch möglich, dass zunächst eine Drehstellung des Behältnisses und insbesondere eines Gewindes des Behältnisses erfasst wird (so kann etwa ein Gewindegang oder ein sonstiges Merkmal inspiziert werden) und danach das Etikett oder der Aufdruck in einem bestimmten Winkel dazu angebracht wird. Der Behältnisverschluss folgt später, wobei zwangsweise durch das Innengewinde des Behältnisverschlusses sich die Position des Lassos ergibt. Dies gilt insbesondere in verblockten Maschinen.

Bevorzugt weist in einem hergestellten Zustand des Behältnisses der Verbindungsstrang etwa nach hinten und das Etikett bzw. der Druck ist vorne.

Bevorzugt ermittelt daher die Inspektionseinrichtung bzw. Beobachtungseinrichtung optisch die Drehstellung des Behältnisverschlusses. Bei einem bevorzugten Verfahren wird wenigstens ein Bild des Behältnisverschlusses und/oder des Verbindungsstrangs und/oder des oder der Befestigungsabschnitte aufgenommen.

Bevorzugt handelt es sich dabei um ein ortsaufgelöstes Bild. Insbesondere wird wenigstens ein Befestigungsabschnitt und insbesondere der erste Befestigungsabschnitt inspiziert.

Es wäre jedoch auch möglich, dass mehrere Eigenschaften der Verbindung zwischen den Behältnisverschluss und den Sicherungsmittel inspiziert werden, insbesondere um eine entsprechende Bildauswertung zu verfeinern und oder zu überprüfen. Auch kann aus diesen Merkmalen auf die Gattung des Behältnisverschlusses geschlossen werden.

Bei einer weiteren bevorzugten Ausführungsform weist der Behältnisverschluss ein Innengewinde auf. Bevorzugt weist das Behältnis selbst ein Außengewinde auf.

Bevorzugt bestehen die genannten Merkmale (d.h. der Verbindungstrang und/oder die Befestigungsabschnitte) in einer festen Phasenbeziehung zu dem Gewindegang des Verschlusses. Dabei kann diese Phasenbeziehung je nach Behältnisverschluss unterschiedlich sein, sie ist jedoch vorteilhaft für jede Gattung an Behältnisverschlüssen vorgegeben.

Bei einem weiteren bevorzugten Verfahren wird mittels der Inspektionseinrichtung auch eine Gattung an Behältnisverschlüssen ermittelt bzw. wenigstens ein Wert ermittelt, der für diese Gattung charakteristisch ist. Besonders bevorzugt wird der Behältnisverschluss und/oder dessen Gattung (insbesondere eindeutig) identifiziert.

Dabei kann für jeden Behältnisverschluss ein Referenzwert beispielsweise ein Referenzwert für einen Offset (insbesondere zwischen dem Gewindegang und dem Verbindungsstrang und/oder den Befestigungsabschnitten) angegeben werden.

Bevorzugt wird also zur Ermittlung der Drehstellung des Behältnisverschlusses gegenüber dem Behältnis eine Gattung des Behältnisverschlusses berücksichtigt. Bevorzugt kann ein Offset zwischen dem Merkmal, d.h. der Position des Verbindungsstranges und/oder des oder der Befestigungsabschnitte und dem Gewindegang des Behältnisverschlusses berücksichtigt werden.

Bei einem besonders bevorzugten Verfahren wird eine Gattung des Behältnisverschlusses vorgegeben und/oder ermittelt und/oder berücksichtigt und daraus ein Wert ermittelt, der für eine Relativposition zwischen einem Gewindegang dieses Verschlusses und dem Gewindegang charakteristisch ist.

So kann beispielsweise für Behältnisverschlüsse der Gattung A bekannt sein, dass ein Anfang eines Gewindegangs um + 30° gegenüber der Position des Verbindungsstranges verdreht ist, während für Behältnisverschlüsse der Gattung B der entsprechende Verdrehwinkel +10° beträgt. Diese Werte können bei der Auswertung einer ermittelten Drehposition verwendet werden.

Bei einem weiteren bevorzugten Verfahren wird das Behältnis während der Inspektion transportiert. Einem weiteren bevorzugten Verfahren wird das Behältnis und oder der Behältnisverschluss während der Inspektion und insbesondere zur Aufnahme eines Bildes mit einer Beleuchtungseinrichtung, wie etwa einer Blitzlampe beleuchtet.

Bei einem weiteren bevorzugten Verfahren handelt es sich bei dem Behältnis um ein Kunststoffbehältnis und insbesondere um eine Kunststoffflasche. Bei einem weiteren bevorzugten Verfahren erfolgt vor der Inspektion ein Verschließen des Behältnisses oder der Behältnisse mittels wenigstens einen Verschließorgans bevorzugt einer Vielzahl von Verschließorganen.

Dabei ist es möglich, dass im Rahmen der Inspektion die Arbeitsweise einzelner Verschließorgane korrigiert und/oder verändert wird. Bei einem weiteren bevorzugten Verfahren werden fehlerhaft verschlossene Behältnisse aus dem Transportpfad der Behältnisse ausgeleitet.

Bei einem weiteren bevorzugten Verfahren wird wenigstens ein Bild einer Oberseite des Behältnisses aufgenommen. Dabei kann es sich beispielsweise um ein vollständiges Bild des Behältnisverschlusses und/oder ein 360°-Bild handeln.

Bei einem weiteren vorteilhaften Verfahren wird die an dem Behältnis befindliche Markierung mit der gleichen Inspektionseinrichtung aufgenommen, wie die Position des Verbindungstragens und/oder die Position des oder der Befestigungsabschnitte. Alternativ wäre es jedoch auch möglich, dass der Behältnisverschluss mit einer ersten Inspektionseinrichtung aufgenommen wird und das Behältnis selbst bzw. die an dem Behältnis befindliche Markierung mit einer weiteren Inspektionseinrichtung.

Bevorzugt wird aus wenigstens einem von den Behältnisverschluss aufgenommenen Bild auf eine Position des Behältnisses Verschlusses gegenüber dem Behältnis und insbesondere auf eine Drehposition des Behältnisverschlusses bezüglich einer Längsrichtung des Behältnisses geschlossen.

Bei einem weiteren vorteilhaften Verfahren ermittelt die Inspektionseinrichtung wenigstens eine weitere für den Behältnisverschluss und oder für dessen Anordnung an dem Behältnis charakteristische Eigenschaft.

Bei einem besonders bevorzugten Verfahren ist diese weitere Eigenschaft aus einer Gruppe von Eigenschaften ausgewählt, welche eine Farbe des Behältnisverschlusses, eine Sorte des Behältnisverschlusses, eine Ausrichtung des Behältnisverschlusses an dem Behältnis, Beschädigungen des Behältnisverschlusses oder des Behältnisses und dergleichen enthält. So kann beispielsweise auch ein falsch oder schief an dem Behältnis angeordneter Behältnisverschluss durch die Inspektion erkannt werden.

Bei einem weiteren bevorzugten Verfahren nimmt die Inspektionseinrichtung wenigstens ein ortsaufgelöstes Bild des Behältnisses und/oder des Behältnisverschluss auf. Bevorzugt ermittelt eine Auswerteeinrichtung aus diesem Bild die Position des Behältnisverschlusses an dem Behältnis bzw. die korrekte Ausrichtung. Dabei kann zur Auswertung eine künstliche Intelligenz herangezogen werden. Bevorzugt wird ein Signal ausgegeben welches für eine korrekte und/oder eine fehlerhafte Drehposition des Behältnisverschlusses gegenüber dem Behältnis charakteristisch ist.

Daneben ist es auch möglich, dass ein Bild dadurch ausgewertet wird, dass es mit Referenzbildern verglichen wird. Gegebenenfalls kann auch hier künstliche Intelligenz zum Einsatz kommen. Bevorzugt wird das Behältnis in seiner Längsrichtung und/oder senkrecht zu seiner Längsrichtung inspiziert. Dabei ist es möglich, dass das Behältnis auch (beispielsweise durch den Einsatz eines Spiegelkabinetts) von mehreren Seiten her und bevorzugt von allen Seiten her aufgenommen wird.

Bevorzugt wird bei einem weiteren bevorzugten Verfahren zur Inspektion des Behältnisses und/oder des Behältnisverschlusses eine Optik und/oder ein Spiegelkabinett eingesetzt. Besonders bevorzugt werden zur Inspektion des Behältnisverschlusses und/oder des Behältnisses wenigstens zwei Kameras bzw. Bildaufnahmeeinrichtungen und bevorzugt wenigstens drei Kameras bzw. Bildaufnahmeeinrichtungen eingesetzt.

Bei einem weiteren bevorzugten Verfahren kann die hier beschriebene Erkennung des Behältnisverschlusses auch andere Prüfungsaufgaben vollziehen, wie oben erwähnt, wie etwa das Vorhandensein eines Behältnisverschlusses, einen fehlenden Verschluss, einen schlecht sitzenden Verschluss und dergleichen.

Bei einem weiteren bevorzugten Verfahren erfolgt die Bildaufnahme des Behältnisverschlusses entozentrisch, telezentrisch oder perizentrisch. Daneben können auch mehr als sechs Bildaufnahmeeinrichtungen bzw. Kameras zur Inspektion eingesetzt werden. Daneben kann auch eine weitere Bildaufnahmeeinrichtung bzw. Kameras eingesetzt werden, welche eine weitere Markierung des Verschlusses, beispielsweise ein Logo und/oder eine Marke von dessen Hersteller erkennt.

Besonders bevorzugt erfolgt eine Erkennung der Markierung an dem Behältnis, beispielsweise an dessen Tragring oder unterhalb dieses Tragrings in der gleichen Einheit oder in einer weiteren zusätzlichen und/oder dafür spezialisierten Einheit. Bevorzugt werden die beiden Positionen der Merkmale in einer oder auch in mehreren Auswerteeinrichtungen bzw. Recheneinheiten ermittelt oder auch in einer ausgelagerten Auswerteeinrichtung und/oder Recheneinheit. Erfolgt die Erkennung an verschiedenen Transportortpositionen, ist dies bevorzugt bei der Zuordnung der Auswertungsergebnisse zu berücksichtigen.

Zusammen mit einer Zuordnung des Verschließorgans kann der Fehler und auch der VDW (Verdrehwinkel) jedes einzelnen Verschließorgans visuell parametriert, gesteuert und/oder geregelt werden. Auch kann bevorzugt bei Auftreten von Fehlern das entsprechende Verschließorgan, welches diesen Verschluss an dem Behältnis angeordnet hat, identifiziert werden.

Die vorliegende Erfindung erlaubt damit bevorzugt eine sichere Erkennung der Orientierung eines Gewindegangs in einem Verschluss ohne eine im Stand der Technik nötige Hilfsmarke. Zusammen mit dem Merkmal an dem Behältnis kann eine stabile und robuste Erkennung der VDW (Verschlussdrehwinkel)position ermittelt werden. Daneben ist auf diese Weise eine echte Dichtheitserkennung des Behältnisses möglich.

Die Erfindung kann zusammen mit anderen oben aufgeführten und nützlichen Überprüfungen in einer Einheit kombiniert werden. Damit funktioniert die vorliegende Erfindung auch bei schwierigen Farben oder Behältnisverschlüssen.

Die vorliegende Erfindung ist weiterhin auf eine Vorrichtung zum Herstellen von mit Getränken befüllten und mit Behältnisverschlüssen versehenen oder zu versehenden Behältnissen gerichtet, wobei der Behältnisverschluss eine auf eine Mündung des Behältnisses auf zu schraubende Verschlusskappe (oder eine auf das Behältnis aufgeschraubte Verschlusskappe), ein in einer Längsrichtung des Behältnisses Satzes unterhalb der Mündung an dem Behältnis anzuordnendes (oder angeordnetes) Sicherungsmittel, einen Verbindungsstrang, der das Sicherungsmittel mit der Verschlusskappe verbindet, einen ersten Befestigungsabschnitt, an und/oder mit dem der Verbindungsstrang an der Verschlusskappe befestigt ist und einen zweiten Befestigungsabschnitt, an und/oder mit dem der Verbindungsstrang an dem Sicherungsmittel angeordnet ist, aufweist.

Weiterhin weist die Vorrichtung eine Transporteinrichtung auf, welche die Behältnisse entlang eines vorgegebenen Transportpfads transportiert und eine Inspektionseinrichtung zum Inspizieren der mit den Behältnisverschlüssen versehenen Behältnisse und/oder eine Beobachtungseinrichtung zum Beobachten der mit den Behältnisverschlüssen versehenen Behältnisse (insbesondere während dieses Transports d.h. während der Bewegung der Behältnisse), welche dazu geeignet ist, eine Drehstellung de Behältnisverschlusses gegenüber dem Behältnis und/oder eine Drehstellung des Behältnisverschlusses und/oder eine Drehstellung des Behältnisses zu ermitteln,

Im Rahmen der vorliegenden Anmeldung werden die Begriffe Behältnisverschluss und Verschluss synonym verwendet und die Verschlusskappe ist ein Bestandteil des Behältnisverschlusses.

Erfindungsgemäß weist die Vorrichtung eine in der Transportrichtung der Inspektionseinrichtung nachgeordnete Ausstattungseinrichtung aufweist, welche das Behältnis mit einer Ausstattung, insbesondere einem Etikett und/oder einem Aufdruck ausstattet, wobei die Vorrichtung dazu geeignet und bestimmt, diese Ausstattung des Behältnisses unter Berücksichtigung der Drehstellung des Behältnisverschlusses durchzuführen.

Bei einer weiteren vorteilhaften Ausführungsform weist die Vorrichtung eine Ausrichteinrichtung auf, welche die Behältnisse hinsichtlich ihrer Drehstellungen bezüglich deren Längsrichtungen ausrichtet wobei bevorzugt die Ausrichteinrichtung die Drehstellung bei dieser Ausrichtung berücksichtigt. Bevorzugt ist diese Ausrichteinrichtung in der Transportrichtung der Behältnisse nach der Inspektionseinrichtung angeordnet. Bevorzugt ist diese Ausrichteinrichtung in der Transportrichtung der Behältnisse vor der Ausstattungseinrichtung angeordnet. Besonders bevorzugt unterliegt der Transport von Ausrichterkennung zu Ausstattungseinrichtung einem zwangsgeführtem Behältertransport d.h. die Behälterdrehlage ist nach der Erkennung stets bekannt.

Bevorzugt ist diese Ausrichteinrichtung dazu geeignet und bestimmt, die Behältnisse in eine Solldrehstellung zu drehen, in denen diese ausgestattet also insbesondere etikettiert und/oder bedruckt werden.

Bei einer bevorzugten Ausführungsform weist Ausrichteinrichtung zwei Seitenführungsbänder auf. Daneben kann jedoch die Ausrichteinrichtung auch Greifelemente aufweisen, welche die Behältnisse an ihren Mündungen greifen um diese zu drehen. Daneben kann die Ausrichteinrichtung auch ein Bestandteil der Ausstattungseinrichtung sein, welche die Behältnisse ausstattet, und insbesondere dreht. Auf diese Weise können Synergien genutzt werden, da in vielen Fällen die Behältnisse auch zum Zwecke oder während ihrer Ausstattung bezüglich ihrer Längsrichtung gedreht werden.

Bevorzugt erfolgt die Ausrichtung in der Etikettier- bzw. Kennzeichnungseinrichtung der Behältnisse.

Die Vorrichtung weist weiterhin bevorzugt eine Befüllungseinrichtung auf, welche die Behältnisse mit einer Flüssigkeit und insbesondere einem Getränk befüllt.

Bevorzugt weist die Vorrichtung eine Verschließeinrichtung auf, welche die befüllten Behältnisse mit einem Behältnisverschluss und insbesondere einem Behältnisverschluss der oben beschriebenen Art verschließt

Bei einer bevorzugten Ausführungsform ist die Befüllungseinrichtung in der Transportrichtung der Behältnisse vor der Inspektionseinrichtung angeordnet. Bevorzugt ist auch die Verschließeinrichtung vor der Inspektionseinrichtung angeordnet.

Bei dieser Ausgestaltung werden also die Behältnisse zunächst befüllt und verschlossen und anschließend etikettiert.

Es wäre jedoch auch möglich, dass die Befüllungseinrichtung und/oder die Verschließeinrichtung nach der Inspektionseinrichtung und insbesondere auch nach der Ausstattungseinrichtung bzw. Etikettiereinrichtung angeordnet sind. In diesem Fall werden bevorzugt die noch leeren Behältnisse inspiziert um auf diese Weise deren Drehstellung zu erfassen

Vorteilhaft ermittelt die Inspektionseinrichtung die Drehstellung des Behältnisverschlusses aus einer Position des Verbindungsstrangs und/oder einer Position wenigstens eines Befestigungsabschnitts.

Es wird also auch vorrichtungsseitig vorgeschlagen, dass zur Ermittlung der Drehstellung auf ein Element zurückgegriffen wird, welches die Verschlusskappe mit dem Sicherungsmittel verbindet. Auf diese Weise kann die Auswertung bzw. Erfassung der Drehstellung auf ein ohnehin technisch notwendiges Merkmal der Verschlusskappe gerichtet werden.

Bei einer weiteren vorteilhaften Ausführungsform weist die Vorrichtung eine Verschließeinrichtung auf, welche die Behältnisse mit den Verschlüssen verschließt.

Bei einer weiteren vorteilhaften Ausführungsform weist die Vorrichtung eine Bildauswerteeinrichtung auf, welche dazu geeignet und bestimmt ist, aus wenigstens einem der aufgenommenen Bilder wenigstens einen Wert auszugeben, der für eine Winkelposition des Verbindungsstrangs und/oder wenigstens eines Befestigungsabschnitts charakteristisch ist.

Die vorliegende Erfindung ist weiterhin auf Behältnis, insbesondere ein Getränkebehältnis mit einem Behältnisverschluss, gerichtet wobei der Behältnisverschluss eine auf einer Mündung des Behältnisses aufgeschraubte Verschlusskappe, ein in einer Längsrichtung des Behältnisses unterhalb der Mündung an dem Behältnis angeordnetes Sicherungsmittel (12b), einen Verbindungsstrang, der das Sicherungsmittel mit der Verschlusskappe (12a) verbindet, einen ersten Befestigungsabschnitt an dem der Verbindungsstrang an der Verschlusskappe befestigt ist und einen zweiten Befestigungsabschnitt (12e) mit dem der Verbindungsstrang an dem Sicherungsmittel angeordnet ist, aufweist und wobei das Behältnis weiterhin eine Ausstattung, insbesondere in Form eines Aufdrucks oder eines Etiketts aufweist.

Erfindungsgemäß ist das Behältnis durch ein Verfahren der oben beschriebenen Art und/oder durch eine Vorrichtung der oben beschriebenen Art hergestellt.

Bevorzugt liegt die Ausstattung dem Verbindungstrang gegenüber. Bevorzugt handelt es sich bei dem Behältnis um ein Kunststoffbehältnis.

Weitere Vorteile und Ausführungsformen ergeben sich aus den beigefügten Zeichnungen. Darin zeigen:
- Fig. 1a, b: zwei schematische Darstellungen eines Behältnisverschlusses;
- Fig. 2: eine Darstellung eines an einem Behältnis angeordneten Behältnisverschlusses;
- Fig. 3: eine Darstellung einer erfindungsgemäßen Vorrichtung in einer ersten Ausführungsform;
- Fig. 4: eine schematische Darstellung eines mit der Vorrichtung aus Fig. 3 aufgenommenen Bildes;
- Fig. 5: eine Darstellung einer erfindungsgemäßen Vorrichtung in einer zweiten Ausführungsform;
- Fig. 6: eine schematische Darstellung eines mit der Vorrichtung aus Fig. 5 aufgenommenen Bildes;
- Fig. 7: eine erfindungsgemäße Vorrichtung in einer ersten Ausführungsform; und
- Fig. 8: eine erfindungsgemäße Vorrichtung in einer zweiten Ausführungsform.

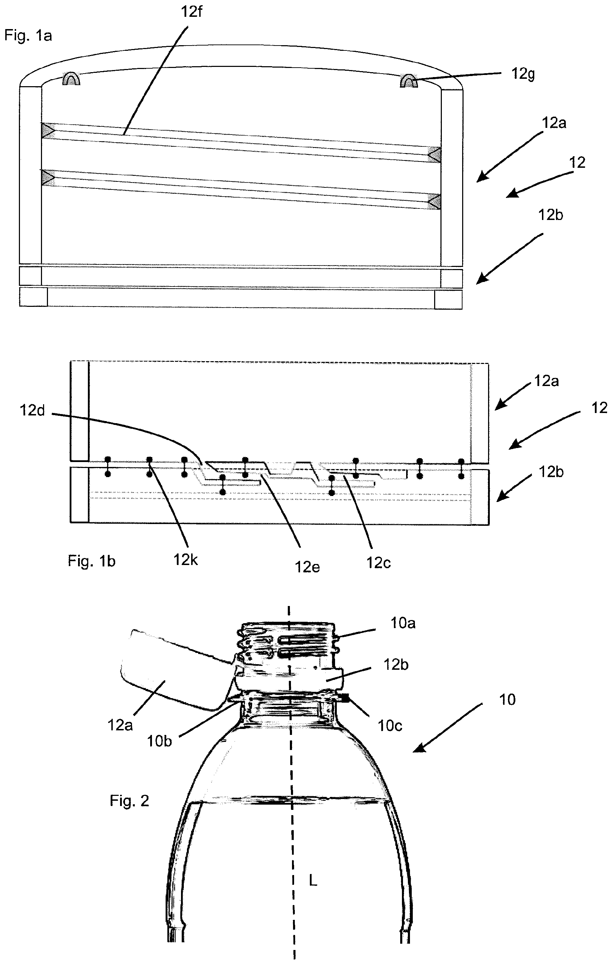

Die Fig. 1a und 1b zeigen eine Darstellung eines Behältnisverschlusses 12. Dieser weist eine Verschlusskappe 12a auf, in deren Inneren ein (Innen)Gewinde 12f angeordnet ist, um die Verschlusskappe auf ein entsprechendes Aussengewinde eines Behältnisses aufzuschrauben. Das Bezugszeichen 12g kennzeichnet ein Abdichtmittel, das in einem verschlossenen Zustand des Behältnisses den Verschluss 12 gegenüber dem Behältnis, genauer gegenüber dem Mündungsrand des Behältnisses abdichtet.

Das Bezugszeichen 12b zeigt einen Sicherungsring, der auch in einem aufgeschraubten Zustand an dem Behältnis verbleibt. Das Bezugszeichen 12c zeigt einen Verbindungsstrang, über den der Sicherungsring 12b mit der Verschlusskappe 12a in Verbindung bleibt. Die Bezugszeichen 12d und 12e zeigen die jeweiligen Befestigungsabschnitte, in denen der Verbindungsstrang an der Verschlusskappe und an dem Sicherungsrichtung befestigt ist. Diese Befestigungsabschnitte können dabei als Gelenkabschnitte ausgebildet sein.

Das Bezugszeichen 12k kennzeichnet eine als Sollreissstelle ausgebildete Verbindung zwischen der Verschlusskappe und dem Sicherungsring, die beim ersten Öffnen des Behältnisses zerrissen wird. Bevorzugt ist eine Vielzahl derartiger Sollreissstellen in Umfangsrichtung bezüglich des Behältnisverschlusses ausgebildet.

Fig. 2 zeigt eine Darstellung eines an einem Behältnis 10 angeordneten Behältnisverschlusses 12. Dieses Behältnis 10 erstreckt sich dabei in der Längsrichtung L und weist dabei ein Außengewinde 10a auf. Das Bezugszeichen 10b kennzeichnet einen Tragring und das Bezugszeichen 10c eine an diesem Tragring 10b angeordnete Markierung, welche von einer Inspektionseinrichtung optisch erfassbar ist, so dass auf eine Drehposition des Behältnisses geschlossen werden kann.

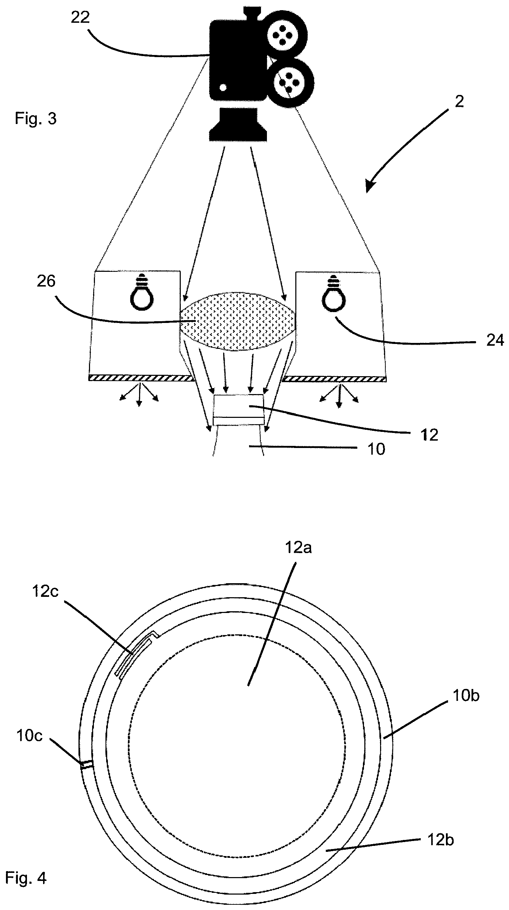

Fig. 3 zeigt eine schematische Darstellung einer Inspektionseinrichtung, welche Bestandteil der erfindungsgemäßen Vorrichtung ist in einer ersten Ausführungsform. Dabei ist eine Bildaufnahmeeinrichtung 22 in der Längsrichtung des Behältnisses 10 oberhalb desselben angeordnet. Diese nimmt mittels einer Linse [ein Bild des an dem Behältnis angeordneten Behältnisverschlusses auf.

Die Linse und das Objektiv der Bildaufnahmeeinrichtung bewirken in geeigneter Kombination eine perizentrische Abbildung und/oder sind gemeinsam als perizentrisches Objektiv zu betrachten. Perizentrische Objektive sind spezielle Objektive in der Messtechnik.

Im Gegensatz zu herkömmlichen Objektiven ist der gegenstandsseitige Strahlengang nicht divergent, sondern konvergent. Dadurch ist es möglich, Objekte durch ein Objektiv aus mehreren Richtungen gleichzeitig zu beobachten. Eingesetzt werden perizentrische Objektive z.B. um die Mantelfläche und die Stirnfläche eines Zylinders mit einer Kamera vollumfänglich zu erfassen. Das Mundstück des Behälters und der Verschluss ist näherungsweise ein zylindrischer Körper.

Das Bezugszeichen 24 kennzeichnet eine Beleuchtungseinrichtung, welche hier ringförmig ausgebildet ist und so den Behältnisverschluss vollumfänglich beleuchtet.

Bevorzugt nimmt die Bildaufnahmeeinrichtung bei allen der hier beschriebenen Ausgestaltungen ein Bild eines beleuchteten Behältnisverschlusses auf, so dass eine Inspektion jeweils im Auflichtverfahren erfolgt.

Fig. 4 zeigt ein von der Bildaufnahmeeinrichtung 22 aufgenommenes Bild. Dabei ist die Verschlusskappe 12a erkennbar, sowie der Tragring 10b des Behältnisses. In dem aufgenommenen Bild ist auch die Markierung 10c am Tragring erkennbar.

Daneben ist in dem Bild hier der Verbindungstrang 12c erkennbar. Eine Bildauswerteeinrichtung kann auf diese Weise die Drehposition des Verbindungsstrangs 12c gegenüber der Drehposition der Markierung 10c ermitteln. Auf diese Weise kann auf die Drehposition des Behältnisverschlusses gegenüber dem Behältnis geschlossen werden. Daneben kann eine Bildauswerteeinrichtung auch die Drehstellung des Verbindungsstrangs etwa in Form einer Winkelstellung ermitteln. Diese Drehstellung kann mit einer Sollstellung abgeglichen werden.

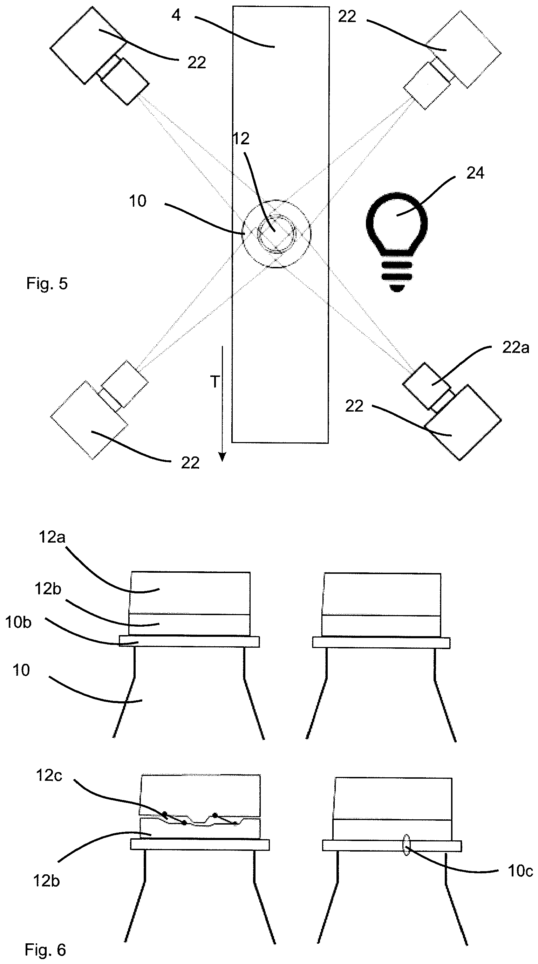

Fig. 5 zeigt eine schematische Darstellung einer erfindungsgemäßen Vorrichtung in einer zweiten Ausführungsform. Bei dieser Ausgestaltung beobachten mehrere, hier vier Bildaufnahmeeinrichtungen bzw. Kameras 22 das Behältnis in einer überwiegend senkrecht zu der Längsrichtung des Behältnisses stehenden Richtung. Daneben ist auch hier eine Beleuchtungseinrichtung 24 vorgesehen.

Dabei kann die Aufnahme der Kameras gleichzeitig und synchron mit der (Blitz) Beleuchtung erfolgen. Die Beleuchtung besteht bevorzugt aus einer monolithischen Einheit oder aus mehreren Segmenten in der monolithischen Einheit. Z.B. zum Zwecke der Beleuchtungsanpassung an verschiedene Verschluss Typen und oder Farben.

Daneben kann die Beleuchtung in der Erkennung örtlich verteilt angesiedelt sein. Es ist möglich, dass jede Kamera einzeln oder eine Untergruppe von Kameras, mit einem individuellem Subset der Beleuchtung aufgenommen wird. Es ist möglich, dass die Einzelaufnahmen der Kamera in zeitlich schneller Abfolge ausgeführt werden.

Bevorzugt ist der zeitliche Abstand der einzelnen Aufnahmen weniger als 10 ms bevorzugt weniger als 5 ms besonders bevorzugt weniger als 2,5 ms. Dies hat den Vorteil, dass das Behältnis möglichst wenig bewegt wird. Weiterhin ist es möglich, dass eine oder mehrere Kameras durch die individuelle Steuerung des Beleuchtungssetups quasi simultan Auf- und Durchlicht Aufnahmen erzielen. Besonders bevorzugt erfolgt die Bildaufnahme aller Bildaufnahmeeinrichtungen zeitgleich.

Es ist vorteilhaft, wenn das Setup an eine bestimmte Verschlusssorte oder auch Verschlusfarbe angepasst wird.

Das Bezugszeichen 4 kennzeichnet eine Transporteinrichtung, welche die Behältnisse 10 entlang eines (hier geradlinigen) Transportpfads T transportiert. Die Bildaufnahme der Behältnisse ist bevorzugt auf die Transporteinrichtung getriggert. Die Transporteinrichtung ist bevorzugt als Transportband ausgebildet.

Fig. 6 zeigt die von den Bildaufnahmeeinrichtungen 22 aufgenommenen vier Bilder. Dabei ist in einem Bild der Verbindungsstrang 12c erkennbar und in einem weiteren Bild die Markierung 10c an dem Tragring. Durch eine Auswertung dieser Bilder kann wiederum auf die Position des Verbindungsstrangs 12c gegenüber der Markierung 10c und damit auf die Drehposition des Behältnisverschlusses 12 gegenüber dem Behältnis 10 geschlossen werden. Daneben kann auch auf eine absolute Drehstellung des Verbindungsstrangs geschlossen werden.

Die hier beschriebene Inspektionseinrichtung ist jedoch auch geeignet, eine Drehstellung eines noch nicht mit einem Behältnisverschluss versehenen Behältnisses zu erfassen. Dies kann beispielsweise durch eine Erfassung der Markierung 10c erfolgen.

Stromaufwärts vor den in den Fig. 3 und 5 gezeigten Inspektionseinrichtungen ist bevorzugt eine Verschließeinrichtung vorgesehen, welche die Behältnisse 10 mit den Behältnisverschlüssen 12 verschließt bzw. die Behältnisverschlüsse auf die Behältnisse aufschraubt.

Bevorzugt handelt es sich bei den im Rahmen dieser Erfindung beschriebenen Behältnisverschlüssen um Schraubverschlüsse, die besonders bevorzugt aus Kunststoff hergestellt sind

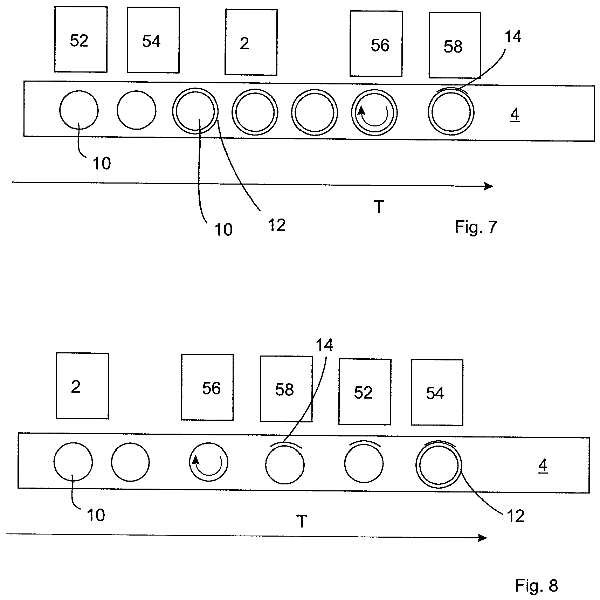

Fig. 7 zeigt eine schematische Darstellung einer erfindungsgemäßen Vorrichtung. Bei dieser Ausführungsform ist eine Transporteinrichtung vorgesehen, welche die Behältnisse 10 entlang eines Transportpfads T transportiert.

Das Bezugszeichen 52 kennzeichnet eine Befüllungseinrichtung, welche die Behältnisse mit einer Flüssigkeit befüllt. An diese Befüllungseinrichtung schließt sich eine Verschliesseinrichtung 54 an, welche die Behältnisse 10 mit Behältnisverschlüssen 12 versieht.

Das Bezugszeichen 2 kennzeichnet die Inspektionseinrichtung, welche die mit den Behältnissverschlüssen versehenen Behältnisse inspiziert und dabei insbesondere eine Drehstellung des Behältnisverschlusses anhand des Lassos und/oder eine Drehstellung des Behältnisses entlang der Längsrichtung L erfasst.

Daneben ist es auch möglich, dass diese Inspektionseinrichtung 2 sowohl die Drehstellung der Behältnisverschlüsse 12 als auch die Drehstellung der Behältnisse 10 und auf diese Weise festgestellt werden kann, ob die Behältnisse ordnungsgemäß verschlossen sind.

Optional kann die Vorrichtung auch eine Ausleiteinrichtung aufweisen, welche solche Behältnisse, welche nicht ordnungsgemäß verschlossen sind aus dem Transportpfad ausleitet. Diese Ausleiteinrichtung ist dabei nach der Inspektionseinrichtung angeordnet.

Das Bezugszeichen 56 kennzeichnet eine Ausrichteinrichtung, welche die Behältnisse 10 hinsichtlich ihrer Drehstellung ausrichtet. Das Bezugszeichen 58 kennzeichnet eine Ausstattungseinrichtung, wie hier eine Etikettiereinrichtung, welche an den Behältnissen eine Ausstattung, hier ein Etikett 14 anbringt.

Fig. 8 zeigt eine weitere Ausführungsform der vorliegenden Erfindung. Bei dieser Ausführungsform inspiziert die Inspektionseinrichtung 2 die noch unverschlossenen Behältnisse 10 hinsichtlich ihrer Drehstellung. Anschließend dreht die Ausrichteinrichtung 56 die noch verschlossenen Behältnisse und die Ausstattungseinrichtung, hier eine Etikettiereinrichtung bringt die Ausstattung, hier Etiketten 14 an dem Behältnis an. Anschließend befüllt die Befüllungseinrichtung 52 die Behältnisse und die Verschließeinrichtung bringt Behältnisverschlüsse 12 an den Behältnissen an.

Es wäre auch möglich, dass zunächst ein Befüllen und Verschließen der Behältnisse erfolgt und erst dann deren Ausstattung durch die Ausstattungseinrichtung.

Der Fachmann erkennt, dass weitere Modifikationen der Reihenfolge möglich sind. Bevorzugt ist jedoch entlang des Transportpfads zunächst die Inspektionseinrichtung 2, anschließend die Ausrichteinrichtung und anschließend die Ausstattungseinrichtung vorgesehen (wobei sich weitere Aggregate zwischen diesen Einrichtungen befinden können).

Bevorzugt ist auch jeweils die Verschließeinrichtung unmittelbar im Anschluss an die Befüllungseinrichtung vorgesehen

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Herstellen von mit Getränken befüllten und mit Behältnisverschlüssen (12) versehenen oder zu versehenden Behältnissen (10), wobei der Behältnisverschluss (12) eine auf einer Mündung des Behältnisses (10) aufgeschraubte Verschlusskappe (12a), ein in einer Längsrichtung (L) des Behältnisses unterhalb der Mündung (10a) an dem Behältnis (10) angeordnetes Sicherungsmittel (12b), einen Verbindungsstrang (12c), der das Sicherungsmittel mit der Verschlusskappe (12a) verbindet, einen ersten Befestigungsabschnitt (12d) an dem der Verbindungsstrang an der Verschlusskappe (12a) befestigt ist und einen zweiten Befestigungsabschnitt (12e) mit dem der Verbindungsstrang an dem Sicherungsmittel angeordnet ist, aufweist, wobei die Behältnisse mittels einer Transporteinrichtung transportiert werden und mittels einer Inspektionseinrichtung (2) inspiziert werden, wobei eine Drehstellung der Verschlusskappe (12a) gegenüber dem Behältnis (10) und/oder eine Drehstellung des Behältnisverschlusses und/oder eine Drehstellung des Behältnisses (10) ermittelt wird,
**dadurch gekennzeichnet, dass**
nach der Inspektion der Behältnisse die Behältnisse mit einem Etikett (14) und/oder einem Aufdruck (14) ausgestattet werden, wobei bei dieser Ausstattung die ermittelte Drehstellung des Behältnisverschlusses (12) berücksichtigt wird.

2. Verfahren nach Anspruch 1,
**dadurch gekennzeichnet, dass**
die Drehstellung des Behältnisverschlusses aus einer Position des Verbindungsstrangs und/oder einer Position wenigstens eines Befestigungsabschnitts (12d, 12e) ermittelt wird.

3. Verfahren nach wenigstens einem der vorangegangen Ansprüche,
**dadurch gekennzeichnet, dass**
nach den Inspektion das mit dem Verschluss versehene Behältnis hinsichtlich seiner Drehstellung bezüglich seiner Längsrichtung ausgerichtet wird und insbesondere um einen vorgegebenen Winkel bezüglich der Längsrichtung gedreht wird.

4. Verfahren nach dem vorangegangenen Anspruch,
**dadurch gekennzeichnet, dass**
der vorgegebene Winkel unter Berücksichtigung der ermittelte Drehstellung des Behältnisverschlusses (12) ermittelt wird.

5. Verfahren nach wenigstens einem der vorangegangen Ansprüche,
**dadurch gekennzeichnet, dass**
die Ausrichtung derart erfolgt, dass die Ausstattung an dem Behältnis dem Verbindungsstrang gegenüber liegt.

6. Verfahren nach wenigstens einem der vorangegangen Ansprüche,
**dadurch gekennzeichnet, dass**
wenigstens ein Bild einer Oberseite des Behältnisverschlusses aufgenommen wird.

7. Verfahren nach wenigstens einem der vorangegangenen Ansprüche,
**dadurch gekennzeichnet, dass**
die Inspektionseinrichtung wenigstens eine weitere für den Behältnisverschluss und/oder für dessen Anordnung an dem Behältnis charakteristische Eigenschaft ermittelt und bevorzugt die weitere Eigenschaft aus einer Gruppe von Eigenschaften ausgewählt ist, welche eine Farbe des Behältnisverschlusses eine Sorte des Behältnisverschlusses, eine Ausrichtung des Behältnisverschlusses an dem Behältnis, Beschädigungen des Behältnisverschlusses oder des Behältnisses und dergleichen enthält.

8. Verfahren nach wenigstens einem der vorangegangenen Ansprüche,
**dadurch gekennzeichnet, dass**
die Inspektionseinrichtung wenigstens ein ortsaufgelöstes Bild des Behältnisses und des Behältnisverschlusses aufnimmt.

9. Verfahren nach wenigstens einem der vorangegangenen Ansprüche,
**dadurch gekennzeichnet, dass**
das Behältnis in seiner Längsrichtung und/oder senkrecht zu seiner Längsrichtung inspiziert wird.

10. Verfahren nach wenigstens einem der vorangegangenen Ansprüche,
**dadurch gekennzeichnet, dass**
zur Ermittlung der Drehstellung des Behältnisverschlusses eine Gattung des Behältnisverschlusses berücksichtigt wird.

11. Vorrichtung (1) Herstellen von mit Getränken befüllten und mit Behältnisverschlüssen (12) versehenen oder zu versehenden Behältnissen (10), wobei der Behältnisverschluss (12) eine auf einer Mündung des Behältnisses (10) aufgeschraubte Verschlusskappe (12a), ein in einer Längsrichtung (L) des Behältnisses unterhalb der Mündung (10a) an dem Behältnis (10) angeordnetes Sicherungsmittel (12b), einen Verbindungsstrang (12c), der das Sicherungsmittel mit der Verschlusskappe (12a) verbindet einen ersten Befestigungsabschnitt (12d) an dem der Verbindungsstrang an der Verschlusskappe (12a) befestigt ist und einen zweiten Befestigungsabschnitt (12e) mit dem der Verbindungsstrang an dem Sicherungsmittel angeordnet ist, aufweist, mit einer Transporteinrichtung (4), welche die Behältnisse entlang eines vorgegebenen Transportpfads (T) transportiert werden und mit einer Inspektionseinrichtung (2) zum Inspizieren der mit den Behältnisverschlüssen versehenen Behältnisse (10) welche dazu geeignet ist, eine Drehstellung des Behältnisverschlusses (12) gegenüber dem Behältnis (10) und/oder eine Drehstellung des Behältnisverschlusses (12) zu ermitteln
**dadurch gekennzeichnet, dass**
die Vorrichtung (1) eine in der Transportrichtung der Inspektionseinrichtung nachgeordnete Ausstattungseinrichtung aufweist, welche das Behältnis mit einem Etikett und/oder einem Aufdruck ausstattet, wobei die Vorrichtung dazu geeignet und bestimmt, diese Ausstattung des Behältnisses unter Berücksichtigung der Drehstellung des Behältnisverschlusses (12) oder einer Gewindeorientierung durchzuführen.

12. Vorrichtung (1) nach dem vorangegangenen Anspruch,
**dadurch gekennzeichnet, dass**
die Vorrichtung eine Ausrichteinrichtung (56) aufweist, welche die Behältnisse hinsichtlich ihrer Drehstellungen bezüglich deren Längsrichtungen ausrichtet wobei bevorzugt die Ausrichteinrichtung bevorzugt die Drehstellung bei dieser Ausrichtung berücksichtigt.

13. Vorrichtung (1) nach Anspruch 10,
**dadurch gekennzeichnet, dass**
die Vorrichtung (1) eine Verschließeinrichtung (54) aufweist, welche die Behältnisse (10) mit Verschlüssen verschließt.

14. Vorrichtung (1) nach wenigstens einem der vorangegangenen Ansprüche,
**dadurch gekennzeichnet, dass**
die Vorrichtung (1) eine Bildauswerteeinrichtung aufweist, welche dazu geeignet und bestimmt ist, aus wenigstens einem der aufgenommenen Bilder wenigstens einen Wert auszugeben, der für eine Winkelposition des Verbindungsstrangs und/oder wenigstens eines Befestigungsabschnitts (12d, 12e) charakteristisch ist.

15. Behältnis (10), insbesondere Getränkebehältnis (10) mit einem Behältnisverschluss, wobei der Behältnisverschluss (12) eine auf einer Mündung des Behältnisses (10) aufgeschraubte Verschlusskappe (12a), ein in einer Längsrichtung (L) des Behältnisses unterhalb der Mündung (10a) an dem Behältnis (10) angeordnetes Sicherungsmittel (12b), einen Verbindungsstrang (12c), der das Sicherungsmittel mit der Verschlusskappe (12a) verbindet einen ersten Befestigungsabschnitt (12d) an dem der Verbindungsstrang an der Verschlusskappe (12a) befestigt ist und einen zweiten Befestigungsabschnitt (12e) mit dem der Verbindungsstrang an dem Sicherungsmittel angeordnet ist, aufweist und wobei das Behältnis (10) weiterhin eine Ausstattung (14) aufweist,
**dadurch gekennzeichnet, dass**
das Behältnis durch ein Verfahren nach wenigstens einem der vorangegangenen Ansprüche 1 - 10 und/oder durch eine Vorrichtung nach wenigstens einem der Ansprüche 11 - 14 hergestellt ist.
